# EUROPÄISCHE PATENTSCHRIFT

(11) **EP 1 637 571 B1**
(45) Veröffentlichungstag und Bekanntmachung des Hinweises auf die Patenterteilung: **11.04.2012**
(21) Anmeldenummer: 05017171.9
(22) Anmeldetag: 06.08.2005
(51) Int. Cl.: C09J 11/00

(54) **Wärmeleitfähige Haftklebstoffe**
Thermally conductive pressure-sensitive adhesive
Une composition adhésive thermoconductrice, sensible à la pression.

(30) Priorität: 23.08.2004 DE 102004040840
(43) Veröffentlichungstag der Anmeldung: 22.03.2006
(73) Patentinhaber: Henkel AG & Co. KGaA, 40589 Düsseldorf (DE)
(72) Erfinder: Becker, Bettina, 40789 Monheim (DE); Giesinger, Josef, 69214 Eppelheim (DE); Butterbach, Rüdiger, 45219 Essen (DE); Kluth, André, 40721 Hilden (DE)

(56) Entgegenhaltungen:
- EP-A- 0 566 093
- EP-A- 1 318 181
- WO-A-81/03028
- DE-A1- 2 343 870
- GB-A- 1 146 924
- US-A- 4 810 563

## Beschreibung

Die Erfindung betrifft einen Haftschmelzklebstoff mit verbesserter thermischer Leitfähigkeit sowie dessen Verwendung und ein Verfahren zur Herstellung von Verbundbauteilen mit verbesserter Wärmeleitfähigkeit.

Ziel moderner Kühlschrankkonstruktionen ist es, einerseits den gekühlten nutzbaren Innenraum des Kühlschranks oder Kühlmöbels mit möglichst großem Volumen zu versehen und dabei gleichzeitig glatte Innenwände zu ermöglichen, die leicht zu reinigen und zu pflegen sind. Dies schließt die Anwesenheit von vorspringenden Verdampferteilen im Innenraum, wie sie bei früheren Konstruktionen üblich waren, aus. Andererseits soll der Energieverbrauch eines derartigen Kühlschrankes oder Kühlmöbels möglichst niedrig ausfallen. Hierzu ist ein effizienter Wärmeübergang aus dem zu kühlenden Nutzraum auf die Verdampferaggregate eines üblichen mit einer Kompressionskältemaschine arbeitenden Kühlschrankes notwendig.

Üblich sind heutzutage daher Kühlschrank-/Kühlmöbel-Konstruktionen, die eine Innenschale oder Innenverkleidung aufweisen, die zum gekühlten Nutzraum eine glattwandige Ausführung ermöglicht. Diese Innenverkleidung trägt auf Ihrer Außenseite die Verdampferaggregate, die üblicherweise als Schlangen ausgebildet sind und auf einem Wärmeleitfähigkeitsblech aufgebracht sind. Diese mit dem Verdampfungseinheiten versehene Innenverkleidung ist in einem Außengehäuse angeordnet, wobei der Zwischenraum zur thermischen Isolation mit wärmedämmenden Schaum ausgefüllt ist. Die Innenverkleidung des Kühlmöbels ist dabei in der Regel aus schlagfesten Kunststoffen geformt, meistens handelt es sich hierbei um Acrylnitril-Butadien-Styrol-Terpolymere (ABS). Das Außengehäuse beziehungsweise die Außenhaut des Kühlmöbels kann aus Kunststoff sein, sie ist jedoch häufig aus dünnen metallischen Blechen geformt.

Zur Erhöhung der Energie-Effizienz von Kühlschränken schlägt das Dokument EP 1310751 A2 die Verwendung von metallischen Filmen oder metallisierten Polymerfilmen an den Wänden der Kühlschränke vor, dabei sollen diese metallischen Filme oder metallisierten Filme intern, extern oder als Schichten in den Wänden in der Kühlschränke angebracht sein.

Es ist weiterhin üblich, dünne Metallbleche, z.B. Aluminiumbleche als Wärmeleitfähigkeitsbleche auf den Außenseiten der Innenverkleidung des Kühlmöbels anzubringen. Dies geschieht im Stand der Technik und der Verwendung von doppelseitigen Klebebändern oder unter Verwendung von Haftklebstoffen.

Die üblicherweise verwendeten Klebebänder oder Haftklebstoffe behindern jedoch den effektiven Wärmeübergang aus dem inneren zu kühlenden Nutzraum des Kühlschrankes auf die Verdampferaggregate an der Außenseite der Innenverkleidung.

Aufgabe der Erfindung ist es daher, thermisch leitfähige Haftklebstoffe, insbesondere für die Herstellung von Kühlmöbeln/Kühlschränken zur Verfügung zu stellen, die einen guten Wärmeübergang bei Raumtemperatur sowie insbesondere bei Temperaturen unterhalb der Raumtemperatur ermöglichen.

Die Lösung der Aufgabe ist den Patentansprüchen zu entnehmen, sie besteht im wesentlichen in der Bereitstellung eines Haftschmelzklebstoffes, der bei +20°C eine Wärmeleitfähigkeit von mindestens 0,15 W/K-m und bei -30°C mindestens eine Wärmeleitfähigkeit von 0,16 W/K.m aufweist.

Ein weiterer Gegenstand der vorliegenden Erfindung ist die Verwendung des Haftschmelzklebstoffes mit den vorgenannten Eigenschaften zum Verkleben von Kühlmöbeln/Innenverkleidungen mit Wärmeleitfähigkeitsblechen.

Ein weiterer Gegenstand der vorliegenden Erfindung ist ein Verfahren zur Herstellung von Teilen für Kühlmöbel gekennzeichnet durch die folgenden wesentlichen Verfahrensschritte:
a) Auftragen des Haftschmelzklebstoffes auf das oder die Wärmeleitfähigkeitsblech(e),
b) Verbinden des Klebstoff-beschichteten Wärmeleitfähigkeitsbleches mit der Außenseite der Innenverkleidung des Kühlmöbels,
c) Fixieren der Verdampferschlangen auf dem/den Wärmeleitfähigkeitsblech(en),
d) Einsetzen des gemäß Schritt a) bis c) erstellten Teiles in die Außenhaut des Kühlmöbels,
e) Ausschäumen des Zwischenraumes zwischen Innenverkleidung und Außenhaut mit einem wärmedämmenden Schaum.

"Wärmeleitfähigkeitsbleche" im Sinne dieser Erfindung sind dabei üblicherweise Aluminiumbleche mit einer Dicke von 0,2 bis 1 mm, die auf die Außenseiten der Innenverkleidung des Kühlmöbels aufgebracht werden sollen. Auf diese Wärmeleitfähigkeitsbleche werden dann in einem nachfolgenden Arbeitsschritt die Verdampferaggregate, meistens in Form von flachen Kupferrohren, in einer Weise aufgebracht, dass diese im guten thermischen Kontakt mit den Wärmeleitfähigkeitsblechen stehen. Im einfachsten Fall erfolgt dies unter Zuhilfenahme von doppelseitig klebenden Klebebändern.

"Haftschmelzklebstoffe" werden im angelsächsischen Sprachraum auch "Hotmelt pressure sensitive adhesives" (HMPSA) genannt. Sie sind dadurch charakterisiert, dass sie aus der Schmelze auf die Substrate aufgetragen werden und bei Raumtemperatur ohne eine Aktivierung durch Lösungsmittel oder Wärme lediglich durch Andrücken an die Oberfläche der zu verklebenden Fügeteile eine Benetzung herbeiführen, die ausreichende Haftungskräfte ergibt.

Wichtige Parameter sowohl für die Verarbeitungseigenschaften als auch für die Gebrauchseigenschaften der erfindungsgemäßen thermisch leitfähigen Haftschmelzklebstoffe sind daher
- die spezifische Haftkraft, d.h. die Ausbildung ausreichender Haftungseigenschaften auf den Fügeteiloberflächen, hier insbesondere der Metallseite des Wärmeleitfähigkeitsbleches und der Innenverkleidung, d.h. einem im wesentlichen unpolaren Kunststoff wie z.B. ABS,
- ein gutes Benetzungsvermögen auf beiden Substraten im Hinblick auf eine schnelle Anfangshaftung,
- eine gute Kohäsionsfestigkeit der Klebeschicht,
- gute thermische Leitfähigkeit zum Ermöglichen des Wärmeübergangs vom Kühlmöbelinnenraum auf das Wärmeleitfähigkeitsblech,
- ausreichende Haftkraft und mechanische Belastbarkeit auch bei sehr tiefen Temperaturen unterhalb der Raumtemperatur.

Die erfindungsgemäßen Haftschmelzklebstoffe müssen also einerseits eine Bindemittelzusammensetzung aufweisen, die die obengenannten klebetechnischen Anforderungen erfüllen und andererseits eine gegenüber dem Stand der Technik verbesserte Wärmeleitfähigkeit aufweisen. Für die verbesserte Wärmeleitfähigkeit, insbesondere bei Temperaturen zwischen +20°C und -30°C enthalten die erfindungsgemäßen Haftschmelzklebstoffe wärmeleitfähige Füllstoffe und/oder Pigmente.

Die wesentlichen Bestandteile des Bindemittels des erfindungsgemäßen Haftschmelzklebstoffes sind dabei elastomere (Block)-Copolymere, klebrigmachende Harze, gegebenenfalls Extender oder Weichmacher, Haftvermittler sowie gegebenenfalls weitere Hilfs- und Zusatzstoffe.

Beispiele für die thermoplastischen Elastomere der Bindemittel-Komponente sind thermoplastische Polyurethane (TPU), die in der Regel auf der Basis aromatischer Diisocyanate aufgebaut sind, andere Beispiele sind Ethylen-Vinylacetat-Coplymere (EVA) aber auch Acrylat-Copolymere und ataktische Polypropylene. Insbesondere eignen sich auch Blockcopolymere vom A-B-, A-B-A-, A-(B-A)ₙ-B-sowie (A-B)ₙ-Y-Typ, worin A einen aromatischen Polyvinylblock darstellt und der B-Block einen gummiartigen Mittelblock umfaßt, der teilweise oder vollständig hydriert sein kann. Beispiele für derartige Blockcopolymere enthalten als A einen Polystyrolblock und B einen im wesentlichen kautschukartigen Polybutadien- und/oder Polyisoprenblock, Y kann eine mehrwertige Verbindung sein und n eine ganze Zahl von mindestens 3. Zur Verbesserung der Wärmestabilität kann ggf. der Mittelblock B (d.h. der Polybutadien- bzw. Polyisoprenblock) teilweise hydriert sein, wodurch zumindest ein Teil der ursprünglich vorhandenen Doppelbindungen entfernt wird. Derartige Blockcopolymere werden auch als SBS-(Styrol-Butadien-Styrol-)Copolymer oder als SIS-(Styrol-Isopren-Styrol)Copolymer bzw. als SEPS-(Styrol-Ethylen-Propoylen-Styrol)-, SEEPS-(Styrol-Ethylen-Ethylen-Propylen-Styrol)- oder SEBS-(Styrol-Ethylen-Butadien-Styrol)-Copolymer von diversen Herstellern angeboten.

Die erfindungsgemäßen Haftschmelzklebstoffe enthalten weiterhin Klebrigmacher - auch "klebrigmachende Harze" (im angelsächsischen Sprachraum "Tackifier") genannt - und/oder Haftvermittler. Beispiele hierfür sind Abietinsäure, Abietinsäureester, Terpenharze, Terpenphenolharze, Poly-α-methylstyrol, phenolmodifizierte Styrolpolymere, phenolmodifizierte α-Methylstyrolpolymere, Resorcinharze, Kohlenwasserstoffharze, insbesondere aliphatische, aromatische oder aromatisch-aliphatische Kohlenwasserstoffharze oder Cumaron-Inden-Harze oder auch Mischungen von klebrigmachenden Harzen und Haftvermittlern.

Das Bindemittel kann zusätzlich zu den obengenannten Haftvermittlern und / oder Klebrigmachern Wachse enthalten, die ebenfalls zum Haftverhalten des erfindungsgemäßen Haftschmelzklebstoffs beitragen können. Dies sind polare Wachse aus der Gruppe der funktionalisierten Polyolefine mit einem Molekulargewichtsbereich (GPC) zwischen etwa 4.000 und 80.000 auf der Basis des Ethylens und/oder Propylens mit Acrylsäure, Methacrylsäure sowie deren C₁ bis C₄ Estern, Itakonsäure, Fumarsäure, Vinylacetat, Kohlenmonoxid und insbesondere Maleinsäure sowie deren Mischungen. Dabei handelt es sich vorzugsweise um mit polaren Monomeren gepfropfte oder copolymerisierte Ethylen-, Propylen- oder Ethylen-Propylencopolymere mit Verseifungs- bzw. Säurezahlen zwischen 2 und 50 mg KOH/g.

Die Rheologie der Bindemittel- Zusammensetzung und/oder die mechanischen Eigenschaften der Klebung kann in an sich bekannter Weise durch die Zugabe von sogenannten Extenderölen, d.h. aliphatischen, aromatischen oder naphtenischen Ölen, niedermolekularen Polybutenen oder Polyisobutylenen, beeinflusst werden. Auch die "klassischen" Weichmacher vom Typ der Dialkyl- oder Alkylaryl-Ester der Phthalsäure oder Dialkylester von aliphatischen Dicarbonsäuren können, ggf. in Abmischung mit den vorgenannten Extenderölen, mit verwendet werden.

Die erfindungsgemäß einzusetzenden Füllstoffe tragen wesentlich zur Erhöhung der Wärmeleitfähigkeit des Haftschmelzklebstoffes bei. Geeignete Füllstoffe sind Quarz, Aluminiumoxid, Magnesiumoxid, Aluminiumnitrid, Siliziumcarbid, Zinksulfid, Aluminiumoxidhydrat, Titandioxid (insbesondere vom Rutil-Typ), Graphit, Calciumsilikat, Magnesiumsilikat, Bornitrid, Boroxid, Berylliumoxid, Aluminiumborat, Talkum oder deren Mischungen. Besonders bevorzugt sind dabei Graphit, Aluminiumoxid oder Titandioxid. Die vorgenannten wärmeleitfähigen Füllstoffe und/oder Pigmente können auch in Mischungen eingesetzt werden. Die Obergrenze für die Partikelgröße der einzusetzenden Füllstoffe und/oder Pigmente richtet sich nach der vorgesehenen Auftragsschichtstärke des Haftschmelzklebstoffes. Die mittlere Teilchengröße beträgt dabei weniger als 200 µm, bevorzugt weniger als 100 µm, ganz besonders bevorzugt weniger als 50 µm. Die mittlere Teilchengröße d 50 soll dabei im Bereich 2 µm bis 100 µm liegen. Es kann vorteilhaft sein, eine bimodale oder trimodale Teilchengrößenverteilung zu verwenden, um eine möglichst dichte Packung des Füllstoffes in der Bindemittelmatrix zu bewirken.

Weiterhin können die erfindungsgemäßen Haftschmelzklebstoffe weitere übliche Hilfs- und Zusatzstoffe enthalten, hierzu zählen insbesondere Rheologiehilfsmittel und Stabilisatoren zum Schutz der Haftschmelzklebstoffe gegen thermischen und/oder oxidativen Abbau der Polymerketten.
Geeignete Stabilisatoren sind beispielsweise 2-(Hydroxyphenyl)-benzotriazol, 2-Hydroxybenzophenon, Alkyl-2-cyano-3-phenylcinnamat, Phenylsalicylat oder 1,3,5-Tris(2'-hydroxyphenyl)triazin. Ebenfalls geeignet sind Antioxidantien der Irganox ® Serie, wie sie durch die Firma Ciba-Geigy (jetzt Novartis) vertrieben werden. Weiterhin geeignet sind Distearyl-Pentaerythritdiphosphat-Verbindungen, beispielsweise Weston ® 617 von Borg-Warner Chemicals. Ebenfalls geeignet sind beispielsweise die folgenden Verbindungen: der Octadecylester von 3,5-Bis(1,1-dimethylethyl)-4-hydroxybenzylpropansäure (Irganox ®1076), 2,4-Bis(n-octylthio)-6-(4-hydroxy-3,5-di-tert- butylanilino)-1,3,5-Triazin (Irganox ® 565), 2-tert-Butyl -6-(3-tert-butyl-2-hydroxy-5-methylbenzyl)-4-methylphenylacrylat (Sumilizer GM), Phosphit-Antioxidantien wie Tris-(Nonylphenyl)phosphit (TNPP), Tris(mono-nonylphenyl)phosphit und Tris(di-nonylphenyl)phosphit (Polygard HR), Bis(2,4-di-tert-butylphenyl)pentaerythritdiphosphit (Ultranox 626), Tris(2,4-di-tert-butylphenyl)phosphit (Irgafos 168) und Kombinationen aus 2 oder mehr der oben genannten Verbindungen.

In bevorzugter Ausführungsform weist der erfindungsgemäße Haftschmelzklebstoff die folgende Zusammensetzung auf:
(a) 5 bis 50 Gew.-%, vorzugsweise 10 bis 50 Gew.-%, mindestens eines (Co)polymers,
(b) 5 bis 50 Gew.-% mindestens eines klebrigmachenden Harzes und/oder eines Haftvermittlers,
(c) 0 bis 40 Gew.-%, vorzugsweise 5 bis 25 Gew.-%, mindestens eines Weichmachers oder Extenderöls,
(d) 5 bis 50 Gew.-% mindestens eines wärmeleitfähigen Füllstoffes oder Pigmenten gemäß Anspruch 2,
(e) 0 bis 10 Gew.-% weiterer Hilfs- und Zusatzstoffe ausgewählt aus Rheologiehilfsmitteln, Farbpigmenten, Stabilisatoren oder deren Mischungen,
wobei sich die Summe der Einzelkomponenten zu 100 Gew.-% ergänzt.

Der erfindungsgemäße Haftschmelzklebstoff lässt sich nach herkömmlichen und an sich bekannten Mischverfahren für derartige Zusammensetzungen herstellen. Vorzugsweise werden sie in evakuierbaren und heizbaren Mischaggregaten hergestellt, beispielhaft erwähnt sein die folgenden Mischaggregate: Planetenmischer, Planetendissolver, Kneter, Innenmischer oder Extruder.

Die bevorzugte Anwendung für die erfindungsgemäßen Haftschmelzklebstoffe ist dabei die Klebung von Wärmeleitfähigkeitsblechen auf die Außenseite von Innenverkleidungen bei Kühlschränken und Kühlmöbeln.

Dazu wird der erfindungsgemäße Haftschmelzklebstoff in schmelzflüssigem Zustand auf das Wärmeleitfähigkeitsblech aufgetragen. Dieser Klebstoffauftrag erfolgt bevorzugt mit einer Auftragswalze oder durch Sprühauftrag. Anschließend wird das so beschichtete Blech auf die Außenwandungen der Innenverkleidung, die vorzugsweise aus ABS besteht, aufgebracht und kurz verpresst. Anschließend werden die Verdampferschlangen auf dem Blech angebracht. Dies kann in einfachster Weise durch mechanisches Fixieren erfolgen, es kann jedoch auch durch Kleben mit wärmeleitfähigen Klebstoffen, wie z.B. mit dem erfindungsgemäßen Haftschmelzklebstoff oder doppelseitigen Klebebändern, erfolgen. Wichtig ist dabei ein guter thermischer Kontakt der Verdampferschlangen mit dem Wärmeleitfähigkeitsblech. Anschließend erfolgt der Einbau der so vormontierten Innenverkleidung in das Außengehäuse des Kühlschrankes oder Kühlmöbels. Dieses Außengehäuse besteht in der Regel aus dünnwandigen Blech, vorzugsweise Stahlblech. Anschließend wird der Zwischenraum zwischen Innenverkleidung und Außenhaut mit einem wärmedämmenden Schaummaterial ausgeschäumt, wobei der Schaumdruck auch dazu beitragen kann, die Verdampferschlangen fester auf das Wärmeleitfähigkeitsblech zu pressen und somit den thermischen Kontakt zwischen Blech und Verdampferschlange zu verbessern.

Die Wärmeleitfähigkeit kann dabei nach der in der DIN 52612 spezifizierten Methode gemessen werden, sie kann auch über das Kupferblockverfahren gemessen werden. Bei letzterem wird der zu prüfende Klebstoff zwischen zwei Kupferblöcke eingebracht und danach werden zwei Temperaturen im Abstand von 5 und 15 mm von der Oberfläche gemessen und auf die Oberflächentemperatur extrapoliert. Die Messeinrichtung wird dabei mit einem Wasserkühler aus Kupfer gekühlt.

Erfindungsgemäß bevorzugt ist jedoch die Bestimmung der Wärmeleitfähigkeit nach der dynamischen Hitzdrahtmethode. Dabei wird in die zu messende Haftschmelzklebstoffprobe ein Draht eingebettet, der gleichzeitig als Heizelement und Temperatursensor dient. Während der Messung wird der Draht mit einer konstanten elektrischen Leistung beheizt. Die zeitliche Entwicklung der mittleren Temperatur des Hitzdrahtes lässt sich anhand des temperaturabhängigen Änderung des Drahtwiderstandes erfassen. Dieser Temperaturverlauf hängt von der Wärmeleitfähigkeit der Probe ab. Die Wärmeleitfähigkeit der Probe wird dann durch Anpassung einer mathematisch-analytischen Lösung an diesen zeitabhängigen Temperaturverlauf unter Berücksichtigung des thermischen Kontaktwiderstandes zwischen Probe und Draht sowie von Wärmeverlusten in axialer Richtung ermittelt. Diese analytische Lösung ist beschrieben bei H.-P. Ebert et. al., High Temp. High Press, 1993, Band 25, Seite 391 bis 402. Um die theoretisch geforderte zeitlich konstante elektrische Leistung zu erzeugen, erfolgt die Beheizung des Hitzdrahtes mit Konstant-Leistungsquellen. Diese vergleichen kontinuierlich auf elektronischem Wege das Produkt aus Stromstärke und Spannungsabfall am Hitzdraht mit einem voreingestellten Referenzwert und halten so die während der Messung in die Messstrecke eingekoppelte Leistung trotz der sich veränderten ohmschen Belastung während des Aufheizens konstant. Zur Bestimmung der Drahttemperatur als Funktion der Zeit werden dabei simultan der Spannungsabfall an einem in Serie zum Hitzdraht geschalteten Shuntwiderstand und der Spannungsabfall über die Potentialabgriffe am Hitzdraht gemessen.

Die vorliegende Erfindung wird nachfolgend durch einige Beispiele erläutert.

### Beispiele

Die nachfolgenden Haftschmelzklebstoffe wurden in einem beheizbaren Laborkneter durch Mischen der Einzelbestandteile bis zur Homogenität hergestellt. Die angegebenen Mengen sind dabei Gewichtsprozent, bezogen auf die Gesamtzusammensetzung. Die Zusammensetzungen und die Messergebnisse der Wärmeleitfähigkeit sind in der nachfolgenden Tabelle zusammengefasst, wobei die Beispiele 2 bis 4 erfindungsgemäße Beispiele sind.

**Tabelle**

| | Beispiel 1 (Vergleich) | Beispiel 2 | Beispiel 3 | Beispiel 4 |
|---|---|---|---|---|
| SBS/SIS-Kautschuk | 27.0 | 23.7 | 24.3 | 23.7 |
| Mineralöl | 22.6 | 19.9 | 20.3 | 19.9 |
| Kohlenwasserstoff-Harz | 38.4 | 33.8 | 34.6 | 33.8 |
| Terpenphenolharz | 11.0 | 9.7 | 9.9 | 9.7 |
| Thermostabilisator | 1.0 | 0.9 | 0.9 | 0.9 |
| Aluminiumoxid¹⁾ | | 12.0 | - | - |
| Graphit²⁾ | | - | 10.0 | - |
| Titandioxid³⁾ | | - | - | 12.0 |
| | | | | |
| Wärmeleitfähigkeit bei +22°C W/K·m | 0.144 | 0.167 | 0.224 | 0.156 |
| Wärmeleitfähigkeit bei -30°C W/K·m | 0.122 | 0.160 | 0.234 | 0.163 |

| | | | | |
|---|---|---|---|---|
| 1) Gehalt an Al₂O₃ > als 99 %, maximale Teilchengröße < 63 µm (Siebanalyse). | | | | |
| 2) Kristallitgröße 100 nm, Aschegehalt 0,05 %, BET-Oberfläche 9 m²·g⁻¹, Teilchengröße unter 75 µm (Siebanalyse) | | | | |
| 3) Rutiltyp, TiO₂-Gehalt 100 %. | | | | |

Die Wärmeleitfähigkeit wurde nach der dynamischen Hitzdrahtmethode bestimmt.

Aus den vorstehenden Versuchen wird deutlich, dass selbst bei einem geringen Füllstoffgehalt von etwa 10 Gew.-% die Wärmeleitfähigkeit der erfindungsgemäßen Haftschmelzklebstoffe um 15 bis über 50 % gegenüber Haftschmelzklebstoffen des Standes der Technik zunimmt.

## Patentansprüche

1. Haftschmelzklebstoff enthaltend thermoplastische Elastomere ausgewählt aus elastomeren Blockcopolymeren, thermoplastischen Polyurethanen, Ethylen-Vinylacetat-Copolymeren, Acrylat-Copolymeren oder ataktischem Polypropylen, sowie wärmeleitfähige Füllstoffe und/oder Pigmente, bestehend aus Aluminiumoxid, Aluminiumoxidhydrat, Titandioxid, Graphit, Calciumsilikat, Magnesiumsilikat, Siliciumcarbid, Siliciumnitrid, Bornitrid, Boroxid, Berylliumoxid, Aluminiumborat, Talkum, Quarz oder deren Mischungen, mit einer Wärmeleitfähigkeit von mindestens 0,15 W/K·m bei + 20°C und mindestens 0,16 W/K·m bei -30°C.

2. Haftschmelzklebstoff nach Anspruch 1, **dadurch gekennzeichnet, dass** das Bindemittel auf der Basis von elastomeren Block-Copolymeren von Typ AB, ABA, A(BA)ₙ B oder (AB)ₙY mit A= Polystyrolblock, B= Polybutadien - und/oder Polyisoprenblock, Y= mehrwertige Verbindung und n= ganzzahlig und mindestens 3, klebrigmachenden Harzen, Extendern, Haftvermittlern und ggf. weiteren Hilfs- und Zusatzstoffen aufgebaut ist.

3. Haftschmelzklebstoff nach Anspruch 1 bis 3 **dadurch gekennzeichnet, dass** er
a. 5 bis 50 Gew.-%, vorzugsweise 10 bis 50 Gew.-%, mindestens eines (Co)polymers,
b. 5 bis 50 Gew.-% mindestens eines klebrigmachenden Harzes und/oder eines Haftvermittlers,
c. 0 bis 40 Gew.-%, vorzugsweise 5 bis 25 Gew.-%, mindestens eines Weichmachers oder Extenderöl,
d. 5 bis 50 Gew.-% mindestens eines wärmeleitfähigen Füllstoffes oder Pigmenten,
e. 0 bis 10 Gew.-% weiterer Hilfs- und Zusatzstoffe ausgewählt aus Rheologiehilfsmitteln, Farbpigmenten, Stabilisatoren oder deren Mischungen
enthält, wobei die Summe der Bestandteile 100 Gew.-% ergibt.

4. Haftschmelzklebstoff nach Anspruch 3, **dadurch gekennzeichnet, das** der/die wärmeleitfähigen Pigment(e) und/oder Füllstoff(e), eine mittlere Teilchengröße d 50 von 2 µm bis 100 µm aufweisen.

5. Verwendung eines Haftschmelzklebstoffes gemäß mindestens eines der vorhergehenden Ansprüche zum Kleben von Kühlmöbel-Innenverkleidungen mit Wärmeleitfähigkeitsblechen.

6. Verfahren zur Herstellung eines Teiles für ein Kühlmöbel **gekennzeichnet durch** die folgenden wesentlichen Verfahrensschritte:
a) Auftragen des Haftschmelzklebstoffes nach einem der Ansprüche 1 bis 5 auf das oder die Wärmeleitfähigkeitsblech(e),
b) Verbinden des Klebstoff-beschichteten Wärmeleitfähigkeitsbleches mit der Außenseite der Innenverkleidung des Kühlmöbels,
c) Fixieren der Verdampferschlangen auf dem/den Wärmelsitfähigkeitsblech(en),
d) Einsetzen des gemäß Schritt a) bis c) erstellten Teiles in die Außenhaut des Kühlmöbeln,
e) Ausschäumen des Zwischenraumes zwischen Innenverkleidung und Außenhaut mit einem wärmedämmenden Schaum.

## Claims

1. A hot melt pressure-sensitive adhesive containing thermoplastic elastomers selected from elastomeric block copolymers, thermoplastic polyurethanes, ethylene-vinyl acetate copolymers, acrylate copolymers or atactic polypropylene, as well as thermally conductive fillers and/or pigments, consisting of aluminium oxide, aluminium oxide hydrate, titanium dioxide, graphite, calcium silicate, magnesium silicate, silicon carbide, silicon nitride, boron nitride, boron oxide, beryllium oxide, aluminium borate, talc, quartz or mixtures thereof, with a thermal conductivity of at least 0.15 W/K.m at +20°C and at least 0.16 W/K.m at -30°C.

2. The hot melt pressure-sensitive adhesive according to claim 1, **characterized in that** the binder is built on the basis of elastomeric block copolymers of the AB, ABA, A(BA)ₙB or (AB)ₙY with A= polystyrene block, B= polybutadiene and/or polyisoprene block, Y= multivalent bond and n= an integer and of at least 3 tackifying resins, extenders, adhesion promoters, and optionally further adjuvants and additives.

3. The hot melt pressure-sensitive adhesive according to claim 1 to 3, **characterized in that** it contains
a. 5 to 50% by weight, preferably 10 to 50% by weight, of at least one copolymer,
b. 5 to 50% by weight of at least one tackifying resin and/or one adhesion promoter,
c. 0 to 40% by weight, preferably 5 to 25% by weight of at least one plasticizer or extender oil,
d. 5 to 50% by weight of at least one thermally conductive filler or pigments,
e. 0 to 10% by weight of further adjuvants and additives, selected from rheology adjuvants, color pigments, stabilizers, or mixtures thereof
wherein the sum of the constituents amounts to 100% by weight.

4. The hot melt pressure-sensitive adhesive according to claim 3, **characterized in that** the thermally conductive pigment(s) and/or filler(s) have an average particle size d 50 from 2 µm to 100 µm.

5. Use of a hot melt pressure-sensitive adhesive according to at least one of the preceding claims for adhesively bonding interior claddings of refrigerated furniture with thermally conductive metal sheets.

6. A method for preparing a part for a refrigerated piece of furniture, **characterized by** the following essential method steps:
a) applying the hot melt pressure-sensitive adhesive according to one of claims 1 to 5 onto the thermally conductive metal sheet(s),
b) binding the adhesive-coated thermally conductive metal sheet to the external side of the interior cladding of the refrigerated piece of furniture,
c) attaching the evaporator coils onto the thermally conductive metal sheet(s),
d) inserting the part made according to steps a) to c) into the external skin of the refrigerated piece of furniture,
e) filling the gap between the interior cladding and the external skin with heat insulating foam.

## Revendications

1. Adhésif thermofusible contenant des élastomères thermoplastiques choisis parmi des copolymères séquencés élastomères, des polyuréthanes thermoplastiques, des copolymères d'éthylène-acétate de vinyle, des copolymères d'acrylate ou du polypropylène atactique, ainsi que des matières de remplissage thermoconductrices et/ou des pigments thermoconducteurs constitués par de l'oxyde d'aluminium, de l'oxydhydrate d'aluminium, du dioxyde de titane, du graphite, du silicate de calcium, du silicate de magnésium, du carbure de silicium, du nitrure de silicium, du nitrure de bore, de l'oxyde de bore, de l'oxyde de béryllium, du borate d'aluminium, du talc, du quartz, ou leurs mélanges, possédant une thermoconductibilité d'au moins 0,15 W/K·m à +20 °C et d'au moins 0,16 W/K·m à -30 °C.

2. Adhésif thermofusible selon la revendication 1, **caractérisé en ce que** le liant est élaboré sur base de copolymères séquences élastomères de type AB, ABA, A(BA)ₙB ou (AB)ₙY avec A = une séquence de polystyrène, B = une séquence de polybutadiène et/ou une séquence de polyisoprène, Y = une liaison polyvalente et n représente un nombre entier et est égal à au moins 3, des résines donnant du collant, des matières de charge, des agents améliorant l'adhérence et le cas échéant d'autres substances auxiliaires et d'autres additifs.

3. Adhésif thermofusible selon les revendications 1 à 2, **caractérisé en ce qu'**il contient
a. de 5 à 50 % en poids, de préférence de 10 à 50 % en poids, au moins un (co)polymère ;
b. de 5 à 50 % en poids, au moins une résine donnant du collant et/ou un agent améliorant l'adhérence ;
c. de 0 à 40 % en poids, de préférence de 5 à 25 % en poids, au moins un plastifiant ou une huile faisant office de matière de charge ;
d. de 5 à 50 % en poids, au moins une matière de remplissage thermoconductrice ou un pigment thermoconducteur ;
e. de 0 à 10 % en poids, d'autres substances auxiliaires et d'autres additifs choisis parmi des adjuvants du comportement rhéologique, des pigments colorés, des stabilisateurs, ou leurs mélanges ;
la somme des constituants donnant 100 % en poids.

4. Adhésif thermofusible selon la revendication 3, **caractérisé en ce que** le/les pigments thermoconducteur(s) et/ou la/les matière(s) de remplissage thermoconductrice(s) présentent une granulométrie moyenne d₅₀ de 2 µm à 100 µm.

5. Utilisation d'un adhésif thermofusible selon au moins une des revendications précédentes pour le collage de revêtements intérieurs de réfrigérateurs comprenant des tôles thermoconductrices.

6. Procédé pour la fabrication d'un élément pour un réfrigérateur **caractérisé par** les étapes opératoires essentielles suivantes :
a) l'application de l'adhésif thermofusible selon l'une quelconque des revendications 1 à 5, sur la tôle ou les tôles thermoconductrices ;
b) le collage de la tôle thermoconductrice enduite de l'adhésif au côté externe du revêtement intérieur du réfrigérateur ;
c) la fixation des serpentins évaporateurs sur la tôle ou les tôles thermoconductrices ;
d) l'incorporation de l'élément fabriqué conformément aux étapes a) à c) dans l'enveloppe externe du réfrigérateur ;
e) le remplissage complet de l'espace intermédiaire entre le revêtement interne et l'enveloppe externe avec une mousse procurant une isolation thermique.
